# FASCICULE DE BREVET EUROPEEN

(11) **EP 4 255 808 B1**
(45) Date de publication et mention de la délivrance du brevet: **21.05.2025**
(21) Numéro de dépôt: 21819457.9
(22) Date de dépôt: 26.11.2021
(51) Int. Cl.: B64D 25/14, B64C 1/14

(54) **ARCHITECTURE DE PORTE D'AERONEF COMPORTANT UNE SOURCE D'ENERGIE DE SECOURS**
FLUGZEUGTÜRARCHITEKTUR MIT EINER NOTENERGIEQUELLE
AIRCRAFT DOOR ARCHITECTURE COMPRISING AN EMERGENCY ENERGY SOURCE

(30) Priorité: 05.12.2020 FR 2012739
(43) Date de publication de la demande: 11.10.2023
(73) Titulaire: Latecoere, 31500 Toulouse (FR)
(72) Inventeur: DEVILLEZ, Sébastien, 31240 SAINT JEAN OCCITANIE (FR)
(74) Mandataire: Junca, Eric
(86) Numéro de dépôt international: PCT/EP2021/083153
(87) Numéro de publication internationale: WO 2022/117453

(56) Documents cités:
- EP-A1- 2 842 873
- WO-A1-2016/061446
- US-A- 5 251 851
- US-A1- 2020 148 370

## Description

### DOMAINE TECHNIQUE

L'invention concerne le domaine de l'aéronautique et concerne plus particulièrement les organes de sécurité au sein d'une architecture de porte d'aéronef.

### ART ANTÉRIEUR

De nombreux aéronefs sont équipés de portes montées dans une ouverture du fuselage pour donner accès à l'intérieur de l'aéronef. Les portes sont adaptées à occuper : une position fermée qui permet le vol en sécurité de l'aéronef et la pressurisation de l'intérieur de l'aéronef ; et une position ouverte qui permet l'accès à la cabine ou aux soutes.

Ces portes d'aéronef font généralement partie d'une architecture qui comprend, en plus de la porte, des mécanismes de manœuvre ainsi que des équipements de sécurité.

Les architectures de porte d'aéronef devant servir de sortie d'urgence comprennent généralement : au moins un éjecteur adapté à entrainer une ouverture d'urgence de la porte ; et un dispositif gonflable d'évacuation, tel qu'un toboggan, permettant, une fois déployé, l'évacuation de l'aéronef en cas d'accident. Une telle architecture de porte est décrite dans le brevet US5,251,851.

Les dispositifs gonflables d'évacuation sont généralement associés à des moyens de gonflage de secours qui doivent permettre un gonflage très rapide du dispositif pour l'évacuation d'urgence de l'aéronef. Les moyens de gonflage les plus courants sont constitués d'une bouteille de gaz inerte sous pression, tel que de l'azote, comme décrit dans la demande de brevet US 2020/0148370.

Les moyens d'actionnement des éjecteurs sont également constitués généralement d'une bouteille de gaz sous pression permettant d'activer l'éjecteur selon un mode d'ouverture d'urgence de la porte qui permet d'ouvrir très rapidement la porte à partir d'un effort minimal pour l'utilisateur.

D'autres moyens de gonflage sont connus pour le dispositif gonflable d'évacuation. Par exemple, la demande de brevet WO2016/061446 décrit un dispositif gonflable d'évacuation dont le gonflage est assuré par un compresseur alimenté par une batterie.

D'autres moyens d'actionnement d'un éjecteur sont également connus. Par exemple, la demande de brevet FR2975967 décrit un éjecteur avec des moyens d'actionnement mécaniques. D'autre part, certains avions de ligne sont équipés d'actionneurs électriques sur leurs portes.

### EXPOSÉ DE L'INVENTION

L'invention a pour but d'améliorer l'agencement des éléments de sécurité des architectures de porte d'aéronef de l'art antérieur.

À cet effet, l'invention vise une architecture de porte d'aéronef selon la revendication 1.

Une architecture de porte d'aéronef est ici définie comme un ensemble formé par une porte d'aéronef et par divers équipements de confort et de sécurité qui sont associés à cette porte, qu'ils soient directement montés sur la porte, ou dans l'environnement de la porte. Une architecture de porte d'aéronef comprend au moins une porte d'aéronef, un éjecteur, et un dispositif gonflable d'évacuation. Cette architecture comporte ainsi différents éléments destinés à interagir. Par exemple, l'éjecteur et le dispositif gonflable d'évacuation peuvent être montés sur l'ouvrant de la porte. Les différents éléments de l'architecture de porte sont liés entre eux de manière physique et fonctionnelle.

Une telle architecture de porte d'aéronef bénéficie de la mutualisation d'une source d'énergie de secours unique alimentant aussi bien l'éjecteur que le dispositif gonflable d'évacuation. Optionnellement, cette source d'énergie de secours peut de plus alimenter d'autres éléments de sécurité ou de confort de la porte d'aéronef, tel qu'un actionneur de barre de retenue.

L'invention permet notamment la mutualisation d'une source unique d'énergie pour tous les systèmes d'urgence de la porte, de sorte que la masse, le cout d'acquisition et le cout de maintenance sont abaissés. Cette alimentation de secours est ségréguée du reste de la gestion d'énergie du bord de l'aéronef, de sorte qu'aucune ouverture intempestive de la porte n'est à craindre.

L'architecture de porte d'aéronef peut dans ce cas se passer complètement d'énergie stockée sous forme de gaz comprimé. En effet, dans l'art antérieur, le stockage d'un gaz tel que de l'azote comprimé, généralement aux environs de 3 000 psi dans différentes bouteilles sous pression pour l'éjecteur et pour le dispositif gonflable d'évacuation, représente une importante masse embarquée, et nécessite une maintenance périodique couteuse. Une inspection fréquente est en effet est requise pour garantir la sécurité des appareils de pression, ainsi qu'une inspection structurelle pour vérifier l'intégrité des bouteilles. Des bouteilles de gaz comprimé remplies et scellées en usine ont par ailleurs été développées pour améliorer la disponibilité de ces sources d'énergie au prix de pièces de rechange plus chères et d'une augmentation de la complexité de la logistique.

Les modalités de l'utilisation de l'énergie électrique permises au sein de l'architecture de porte selon l'invention permettent de s'affranchir de tous les inconvénients liés à l'utilisation de bouteilles de gaz sous pression, ou de systèmes purement mécaniques.

L'énergie électrique de la source d'énergie de secours peut de plus alimenter d'autres actionneurs utiles ou nécessaires au fonctionnement de la porte d'aéronef, tels que les dispositifs d'armement et de désarmement du dispositif gonflable d'évacuation. Des actionneurs électriques remplacent avantageusement les activations mécaniques nécessitant auparavant une succession d'éléments tels que bielles et renvois, et rendant la porte lourde et couteuse pour ce qui est du transport d'énergie mécanique sur une distance importante, ou avec un parcours complexe.

Les composants alimentés par la source d'énergie de secours, lorsqu'elle est électrique, peuvent de plus être plus facilement régulés : un éjecteur muni de moyens d'actionnement électriques peut être plus facilement régulé en vitesse d'ouverture, durant sa course en mode d'ouverture d'urgence, par des moyens de commande électroniques. Un dispositif gonflable d'évacuation muni de moyen de gonflage électrique peut également bénéficier d'un pilotage électronique de son gonflage.

Selon un mode de réalisation, l'éjecteur comporte une connectique de liaison électrique à un réseau électrique de bord d'un aéronef, les moyens d'actionnement électriques de l'éjecteur étant également adaptés à être activés par un réseau électrique de bord d'aéronef.

Selon ce mode de réalisation, les moyens d'activation de l'éjecteur, ainsi que tout autre actionneur électrique adapté à être alimenté par la source d'énergie de secours, peuvent de plus être utilisés durant l'état de fonctionnement nominal. Ces actionneurs sont alors alimentés par le réseau électrique du bord de l'aéronef. Ces actionneurs remplissent alors deux fonctions : une fonction durant l'état de fonctionnement nominal, qui vise à assister les utilisateurs durant le fonctionnement normal de la porte, par exemple en automatisant l'ouverture ou la fermeture de la porte, ou en remplaçant l'activation de leviers mécaniques par des commandes électroniques ; et une fonction de sécurité durant l'état de fonctionnement de secours, notamment l'ouverture d'urgence de la porte sous l'effet de l'alimentation par la source d'énergie de secours.

L'architecture de porte d'aéronef selon l'invention peut comporter les caractéristiques additionnelles suivantes, seules ou en combinaison :
- elle comporte en outre un actionneur de barre de retenue, qui est activable entre : une position d'armement dans laquelle le dispositif gonflable d'évacuation est retenu : et une position de désarmement dans laquelle le dispositif gonflable d'évacuation est relâché ; la source d'énergie de secours étant également reliée à l'actionneur de barre de retenue, la source d'énergie de secours étant adaptée à activer l'actionneur de barre de retenue ;
- l'unité de commande comporte une interface de commande pour un utilisateur, cette interface de commande étant adaptée à commander l'actionneur de barre de retenue vers sa position d'armement ou sa position de désarmement, lorsque l'unité de commande est dans son état de fonctionnement nominal ;
- l'unité de commande comporte en outre un état de fonctionnement d'ouverture depuis l'extérieur dans lequel l'unité de commande commande l'actionneur de barre de retenue vers sa position de désarmement, en cas d'ouverture de la porte depuis l'extérieur ;
- dans l'état de fonctionnement d'ouverture depuis l'extérieur, l'unité de commande active les moyens d'actionnement de l'éjecteur selon un mode d'ouverture nominal de la porte ;
- dans son état de fonctionnement nominal, l'unité de commande est adaptée à commander l'éjecteur selon un mode d'assistance à l'ouverture/fermeture de la porte ;
- l'interface de commande pour un utilisateur est adaptée à commander également l'éjecteur en mode d'assistance à l'ouverture/fermeture de la porte ;
- la porte comprend une poignée d'armement/désarmement, et le mécanisme d'ouverture/fermeture de la porte comprend une poignée d'ouverture qui est mécaniquement reliée au déclencheur mécanique par l'intermédiaire d'un moyen de couplage actionné par la poignée d'armement/désarmement ;
- la source d'énergie de secours comporte une pile thermique ;
- la source d'énergie de secours comporte une première pile thermique adaptée à alimenter électriquement l'actionneur de barre de retenue et à activer une deuxième pile thermique, de capacité supérieure à celle de la première pile thermique, la deuxième pile thermique étant adaptée à alimenter électriquement l'éjecteur et les moyens de gonflage du dispositif gonflable d'évacuation ;
- l'architecture de porte comprend une boite d'isolation comportant un mode permettant la liaison électrique de l'éjecteur, et un mode de coupure de cette liaison électrique ;
- la boite d'isolation est activée en mode de coupure lors de l'activation de la source d'énergie de secours ;
- l'actionneur de barre de retenue comporte une connectique de liaison électrique à un réseau électrique de bord d'un aéronef, l'actionneur de barre de retenue étant également adapté à être activé par un réseau électrique de bord d'aéronef.

La poignée d'ouverte qui est mentionnée ici comme faisant partie du mécanisme d'ouverture/fermeture de la porte, et qui est mécaniquement reliée au déclencheur mécanique par un moyen de couplage, peut être une poignée d'ouverture intérieure ou une poignée d'ouverture extérieure, les aéronefs comportant généralement ces deux types de poignée d'ouverture.

### PRÉSENTATION DES FIGURES

D'autres caractéristiques et avantages de l'invention ressortiront de la description non limitative qui suit, en référence aux dessins annexés dans lesquels :
- La [fig.1] représente schématiquement une architecture de porte d'aéronef selon l'invention ;
- La [fig.2] est un diagramme illustrant le fonctionnement de l'architecture de porte d'aéronef ;
- La [fig.3] est une vue similaire à la figure 1, pour un deuxième mode de réalisation de l'invention.

### DESCRIPTION DÉTAILLÉE

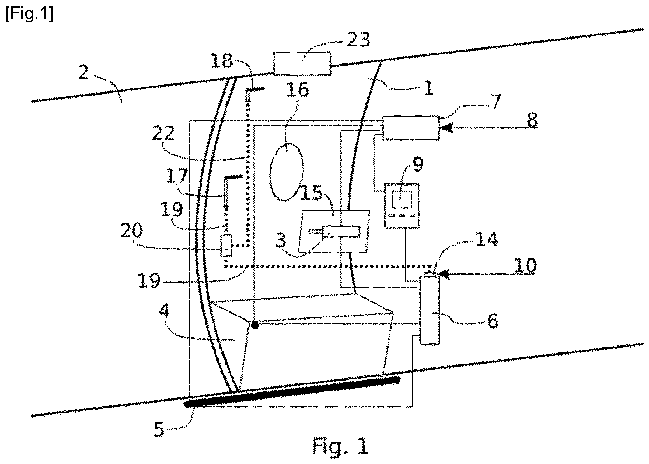

La figure 1 représente schématiquement une portion d'aéronef dans laquelle est installée une architecture de porte d'aéronef selon l'invention.

Cette architecture comprend :
- une porte 1 montée dans une ouverture du fuselage 2 de l'aéronef ;
- un éjecteur 3 adapté à entrainer une ouverture d'urgence de la porte 1 ;
- un dispositif gonflable d'évacuation 4 qui comporte ici un toboggan gonflable monté sur la porte 1 dans une position rétractée de stockage ;
- une barre de retenue associée à un actionneur 5 permettant l'arrimage du dispositif gonflable d'évacuation 4 à l'aéronef.

La porte 1 est articulée par un bras 15 de sorte à pouvoir occuper une position ouverte et une position fermée. Un hublot 16 de sécurité permet de voir les conditions extérieures avant l'ouverture de la porte 1.

Cette architecture d'aéronef comporte un réseau électrique de secours constitué d'une source d'énergie de secours 6 qui est reliée à l'éjecteur 3, au dispositif gonflable d'évacuation 4, et à l'actionneur 5 de barre de retenue. Optionnellement, la source d'énergie de secours 6 peut être reliée à tout autre équipement de sécurité devant être activé lors d'une manœuvre de secours.

La porte 1 comprend de plus une poignée intérieure d'ouverture 17 commandant un mécanisme classique d'ouverture/fermeture de la porte (non représenté), ce mécanisme permettant le verrouillage et le déverrouillage de la porte sur son encadrement. Ce mécanisme d'ouverture/fermeture est également commandé par une poignée extérieure (non visible sur la figure 1) qui est accessible depuis l'extérieur de l'aéronef.

La porte 1 comprend de plus une poignée d'armement/désarmement 18 adaptée à occuper deux positions : une position d'armement correspondant à la mise en service du dispositif gonflable d'évacuation 4, une fois la porte 1 verrouillée ; et une position de désarmement correspondant à la désactivation du dispositif gonflable d'évacuation 4. L'armement ou le désarmement du dispositif gonflable d'évacuation 4 peut se faire mécaniquement ou électriquement.

En plus de leur fonction classique, la poignée intérieure d'ouverture 17, la poignée extérieure d'ouverture, et la poignée d'armement/désarmement 18 remplissent une fonction relative à l'invention, et sont associées à ce titre à des moyens de liaison mécaniques 19, 22. La poignée intérieure d'ouverture 17 et la poignée extérieure d'ouverture sont mécaniquement reliées à un déclencheur mécanique 14 de la source d'énergie de secours 6, par un moyen de couplage 20 qui est actionné par un moyen de liaison mécanique 22 relatif à la poignée d'armement/désarmement 18.

L'architecture de porte d'aéronef comprend de plus une connectique de liaison électrique au réseau électrique du bord de l'aéronef. L'architecture de porte comprend ainsi une boite d'isolation 7 sur laquelle est connecté le réseau électrique de bord de l'aéronef, par exemple un réseau de courant continu 28 V (schématisé par la flèche 8). La boite d'isolation 7 distribue l'énergie électrique du réseau de bord à l'éjecteur 3 ainsi qu'à l'actionneur 5 de barre de retenue. La boite d'isolation 7 fonctionne de plus selon deux modes :
- un mode permettant la liaison électrique de l'éjecteur 3 et de l'actionneur 5 de barre de retenue avec le réseau de bord ;
- un mode de coupure de cette liaison électrique.

L'architecture de porte d'aéronef comprend de plus une unité de commande 9 reliée à la source d'énergie de secours 6 ainsi qu'à la boite d'isolation 7. L'unité de commande 9 comprend les deux états de fonctionnement suivants :
- un état de fonctionnement nominal dans lequel le dispositif gonflable d'évacuation 4 est maintenu dans sa position rétractée et la source d'énergie de secours est désactivée ; un état de fonctionnement de secours dans lequel la source d'énergie de secours 6 active les moyens d'actionnement de l'éjecteur 3 selon un mode d'ouverture d'urgence de la porte 1, et active les moyens de gonflage du dispositif gonflable d'évacuation 4 selon un mode de gonflage d'urgence.

L'état de fonctionnement nominal correspond à l'utilisation normale de la porte 1, qui peut donc être fermée et verrouillée, ainsi que déverrouillée et ouverte, et ce sans activer le dispositif gonflable d'évacuation 4. L'état de fonctionnement de secours correspond à une situation où la porte 1 est ouverte lors d'une manœuvre de secours, au moyen de la poignée intérieure 17.

L'unité de commande 9 est de plus reliée à un ensemble de capteurs renseignant sur l'état de la porte à tout moment, c'est-à-dire sur la position physique de la porte 1 ainsi que sur la position de tout ses éléments de commande. Cet ensemble de capteurs est schématisé sur la figure 1 par un boitier 23.

La source d'énergie de secours 6 peut être constituée par toute source d'énergie adaptée à actionner l'éjecteur ainsi qu'à gonfler le dispositif gonflable d'évacuation 4. Il peut s'agir par exemple d'une unique bouteille de gaz sous pression mais selon l'invention, il s'agit d'une source d'énergie électrique. Selon une caractéristique préférée, la source d'énergie de secours 6 est constituée d'une pile thermique réalisée par empilement de cellules dont chacune comporte une couche formant l'anode, une couche d'électrolyte solide, une couche formant la cathode, et une couche source de chaleur.

La pile thermique présente ici l'avantage de pouvoir être stockée très longtemps sans dégradation de son potentiel énergétique. De plus, la pile thermique est adaptée à fournir une importante quantité d'énergie (se traduisant ici par une forte intensité) en très peu de temps, pour le déclenchement des éléments de sécurité que sont notamment l'éjecteur et le dispositif gonflable d'évacuation. La pile thermique requiert pour son activation une faible quantité d'énergie qui peut être fournie par le travail mécanique d'une manœuvre actionnée par un utilisateur. Dans cette optique, la pile thermique est activée par un déclencheur mécanique 14 relié à un mécanisme d'ouverture de la porte. Plus précisément, le mouvement d'une poignée d'ouverture, lorsque la poignée d'armement/désarmement est en position armée, peut être mis à profit pour activer la pile thermique. L'activation de la pile thermique constituant ici la source d'énergie de secours 6 est schématisée par la flèche 10 sur la figure 1. Cette activation est donc réalisée par le déclencheur mécanique 14, qui est lui-même piloté par le moyen de liaison mécanique 19 raccordé à la poignée 17 (ainsi qu'à la poignée d'ouverture extérieure non visible sur la figure). Le moyen de couplage 20 est un dispositif mécanique (verrou ou autre) qui est piloté par la poignée d'armement/désarmement 18, et qui permet :
- de coupler mécaniquement la poignée d'ouverture (intérieure et extérieure) au déclencheur mécanique 14 de la source d'énergie de secours 6, de sorte que l'actionnement de cette poignée 17 active la source d'énergie de secours 6 lorsque la poignée d'armement/désarmement 18 est dans sa position d'armement ; et
- de désaccoupler la poignée d'ouverture 17 du déclencheur mécanique 14, lorsque la poignée d'armement/désarment 18 est dans sa position de désarmement, de sorte que cette poignée 17 ne commande que le mécanisme d'ouverture de la porte, de manière classique, sans agir sur le déclencheur mécanique 14.

Le pilotage du moyen de couplage 20 par la poignée d'armement/désarmement 18 est assuré par le moyen de liaison mécanique 22. Le dispositif de liaison mécanique 22 peut être par exemple une tringle, ou tout autre dispositif de transmission mécanique.

L'éjecteur 3 comporte des moyens d'actionnement électriques. Sur le schéma de la figure 1, l'éjecteur 3 est par exemple un vérin électrique ou un moteur linéaire. Il peut s'agir également d'un moteur électrique avec un éventuel réducteur entrainant directement en rotation un arbre du mécanisme de la porte, entrainant l'ouverture de la porte 1. L'éjecteur 3 embarque de plus son électronique de commande permettant : en état de fonctionnement nominal, d'assister ou de motoriser l'ouverture et la fermeture de la porte 1 grâce à l'énergie du réseau électrique de bord 8 ; et en mode de secours, d'ouvrir très rapidement la porte 1 grâce à l'énergie de la source d'énergie de secours 6.

Le dispositif gonflable d'évacuation 4 comporte ici un toboggan gonflable classique dans le domaine aéronautique, ainsi que des moyens de gonflage de ce toboggan. Dans le présent exemple, les moyens de gonflage comportent un moteur électrique de 4 000 W entrainant directement une pompe radiale à 14 000 tours/min et permettant un gonflage rapide du toboggan lorsque ce moteur est alimenté par la source d'énergie de secours 6.

L'actionneur 5 de barre de retenue comporte ici un actionneur électrique (vérin ou moteur rotatif) permettant d'armer ou de désarmer le dispositif gonflable d'évacuation 4, c'est-à-dire de verrouiller des crochets de rétention sur la barre de retenue ou au contraire de les relâcher. Lorsque l'actionneur 5 désarme le dispositif 4, l'unité de commande 9 est en état de fonctionnement nominal. La porte 1 peut être ouverte ou fermée en embarquant dans son mouvement le dispositif gonflable d'évacuation 4 sans déclenchement de ce dernier. Lorsque l'actionneur 5 arme le dispositif gonflable d'évacuation 4, la barre de retenue est retenue contre le plancher de l'aéronef et le dispositif gonflable d'évacuation 4 est prêt à être déclenché. En cas de manœuvre d'ouverture de la porte dans cette configuration, la pile thermique constituant la source d'énergie de secours 6 est activée, et l'unité de commande 9 passe alors en état de fonctionnement de secours. L'unité de commande provoque alors notamment le gonflage du dispositif gonflable d'évacuation 4 qui reste rattaché au plancher de l'aéronef.

L'actionneur 5 de barre de retenue est ici électriquement piloté selon la position de la poignée d'armement/désarmement 18. En variante, l'actionneur 5 est directement piloté par le mouvement physique de la poignée d'armement/désarmement 18.

La boite d'isolation 7 comporte des éléments coupe-circuit constitués par exemple de relais ou de transistors de puissance et permettant de couper la connexion électrique entre le réseau électrique du bord 8 et les éléments qui sont alimentés par ce réseau lors de l'état de fonctionnement nominal (l'éjecteur 3 et l'actionneur 5 de barre de retenue, dans cet exemple). L'unité de commande 9 est adaptée à commander la boite d'isolation 7 pour connecter ou pour couper l'alimentation du réseau électrique du bord 8.

L'unité de commande 9 est de plus connectée à la source d'énergie de secours 6. L'unité de commande 9 peut ainsi connaitre l'état (activé ou non activé) de la source d'énergie de secours 6 et peut de plus tirer son alimentation électrique soit du réseau de bord 8 (provenant de sa connexion avec la boite d'isolation 7) soit de la source d'énergie de secours 6.

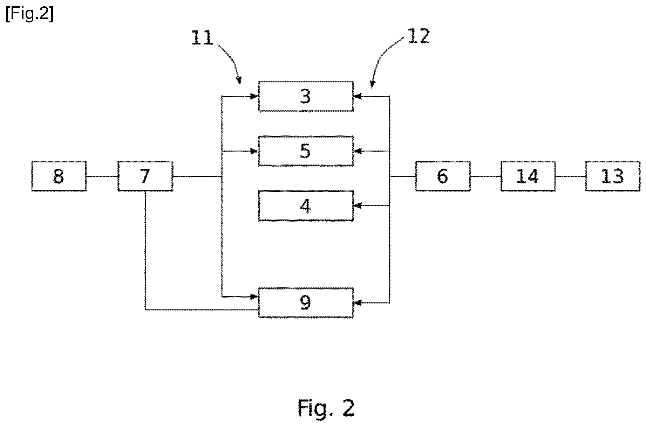

La figure 2 est un diagramme illustrant le fonctionnement de l'architecture de porte d'aéronef qui vient être d'écrite.

L'éjecteur 3, le dispositif gonflable d'évacuation 4, et l'actionneur 5 de barre de retenue sont représentés sous forme de rectangles au centre de la figure. Sur la gauche de ces rectangles, la figure 2 illustre le réseau électrique de bord de l'aéronef avec ici la boite d'isolation 7 reliée au réseau électrique 8 de l'aéronef. L'alimentation de l'éjecteur 3 et de l'actionneur 5 par le réseau électrique du bord, à travers la boite d'isolation 7, est schématisée par les flèches 11.

La figure 2 illustre de plus, sur la droite du diagramme, les éléments permettant l'alimentation des actionneurs par la source d'énergie de secours 6. Cette alimentation est schématisée par les flèches 12.

Cette vue schématique de la figure 2 illustre de plus l'unité de commande 9 qui est également reliée au réseau électrique du bord 8 et à la source d'énergie de secours 6.

Lorsque la porte d'aéronef est dans son mode normal de fonctionnement, l'unité de commande 9 est électriquement alimentée par le réseau électrique du bord 8 et est dans son état de fonctionnement nominal. La porte peut être ouverte pour permettre l'accès à la cabine de l'aéronef et peut être refermée pour permettre le vol de l'aéronef. Dans cet état de fonctionnement nominal, la source d'énergie de secours 6 est désactivée, le dispositif gonflable d'évacuation 4 est maintenu dans sa position rétractée de stockage en restant fixé sur la porte 1, et la boite d'isolation 7 permet l'alimentation de l'éjecteur 3 et de l'actionneur 5 de barre de retenue par le réseau électrique du bord 8. Aucun élément n'est électriquement alimenté par la source d'énergie de secours 6 durant l'état de fonctionnement nominal.

Durant cet état de fonctionnement nominal, l'éjecteur 3 peut être commandé en mode d'assistance à l'ouverture/fermeture de la porte. Les moyens d'actionnement de l'éjecteur 3 sont alors commandés selon un déplacement à faible vitesse correspondant à une ouverture ou fermeture normale de la porte. Cette commande peut avoir lieu sous l'effet d'une commande d'un utilisateur, et l'unité de commande 9 peut alors être munie d'une interface de commande (écran, touches, etc.) permettant à l'utilisateur d'actionner l'ouverture ou la fermeture motorisée de la porte. En variante la porte peut comporter des capteurs détectant une ouverture/fermeture manuelle de la porte, exercée par un utilisateur agissant sur la poignée d'ouverture 17, et l'éjecteur 3 peut être commandé en réponse à cette détection, en accompagnant le geste de l'utilisateur avec l'éjecteur en mode d'assistance.

Dans cet état de fonctionnement nominal, l'actionneur 5 de barre de retenue est commandé par l'unité de commande 9 pour :
- désarmer le dispositif gonflable d'évacuation 4 sur commande d'un utilisateur agissant sur la poignée d'armement/désarmement 18, pour que la porte puisse être utilisée normalement en ouverture/fermeture ;
- armer le dispositif gonflable d'évacuation 4 sur commande d'un utilisateur agissant sur la poignée d'armement/désarmement 18, ou automatiquement, en prévision du vol de l'aéronef ;
- désarmer le dispositif gonflable d'évacuation 4 lorsque ce dernier est armé et que la porte 1 est ouverte depuis l'extérieur de l'aéronef.

Lorsque le dispositif gonflable d'évacuation 4 est armé et qu'un utilisateur actionne l'ouverture de la porte 1 depuis l'intérieur de l'aéronef en actionnant la poignée 17, le déclencheur mécanique 14 associé au mécanisme d'ouverture 13 de la porte active la source d'énergie de secours 6. Plus précisément, le moyen de liaison mécanique 19 permet l'activation directe du déclencheur mécanique 14, à partir du mouvement physique de la poignée 17, sans nécessité aucune source d'énergie extérieure. Cette situation de secours a lieu par exemple lorsque la porte est ouverte en urgence suite à un accident, même si tous les moyens électriques du bord sont inopérants.

Le déclencheur mécanique 14 entraine ici l'activation d'un élément chauffant qui déclenche l'activation de la pile thermique constituant ici la source d'énergie de secours 6. Le déclencheur mécanique 14 peut être associé à tout élément chauffant adapté tels que dispositifs à friction, dispositifs électriques, ou à poudre.

L'unité de commande 9, qui est connectée à la source d'énergie de secours 6, reçoit ainsi l'information relative à l'activation de la source d'énergie de secours 6. L'unité de commande 9 passe alors en état de fonctionnement de secours et commande la boite d'isolation 7 en coupure de circuit de sorte que le réseau électrique de bord 8 n'alimente plus aucun élément 3, 5, 9.

Dans cet état de fonctionnement de secours, le module de commande 9 est maintenant alimenté par la source d'énergie de secours 6, et exécute les commandes suivantes :
- l'éjecteur 3 est commandé en mode d'ouverture d'urgence pour provoquer une ouverture très rapide de la porte ;
- les moyens de gonflage du dispositif gonflable d'évacuation 4 sont ensuite commandé en mode de gonflage d'urgence, pour provoquer un gonflage très rapide (en quelques secondes) du dispositif gonflable d'évacuation.

L'éjecteur 3 de même que le dispositif gonflable d'évacuation 4 peuvent être pilotés finement durant ces modes d'urgence, par l'électronique de commande. Par exemple l'éjecteur 3 peut ralentir l'ouverture de la porte 1 lorsque le dispositif gonflable d'évacuation 4 se détache de la porte, puis accélérer à nouveau l'ouverture. Pour le dispositif gonflable d'évacuation 4, différentes vitesses de gonflage peuvent également être mises en œuvre durant de cette opération de gonflage.

Lorsque le dispositif gonflable d'évacuation 4 est armé (poignée d'armement/désarmement 18 en position armée) et qu'un utilisateur actionne l'ouverture depuis l'extérieur de l'aéronef en actionnant la poignée extérieure de la porte 1, le mécanisme d'ouverture 13 active également le déclencheur mécanique 14 et donc la source d'énergie de secours 6, par l'intermédiaire de la liaison mécanique 19. Cette situation de secours a lieu par exemple lorsque la porte est ouverte suite à un accident, mais de l'extérieur (par exemple, par les équipes de secours). Cependant, dans ce cas d'ouverture depuis l'extérieur, l'unité de commande 9 passe dans un autre état de fonctionnement appelé ici « état de fonctionnement d'ouverture depuis l'extérieur ». Dans cet état de fonctionnement d'ouverture depuis l'extérieur, l'unité de commande 9 commande boite d'isolation 7 en coupure de circuit de sorte que le réseau électrique de bord 8 n'alimente plus aucun élément 3, 5, 9. Le module de commande 9 est maintenant alimenté par la source d'énergie de secours 6, et exécute les commandes suivantes :
- désarmer le dispositif gonflable d'évacuation 4 ;
- commander l'éjecteur 3 en ouverture selon un mode d'ouverture nominal, c'est-à-dire de la même manière que lors du fonctionnement nominal (ouverture de la porte à vitesse normale, et non en ouverture d'urgence).

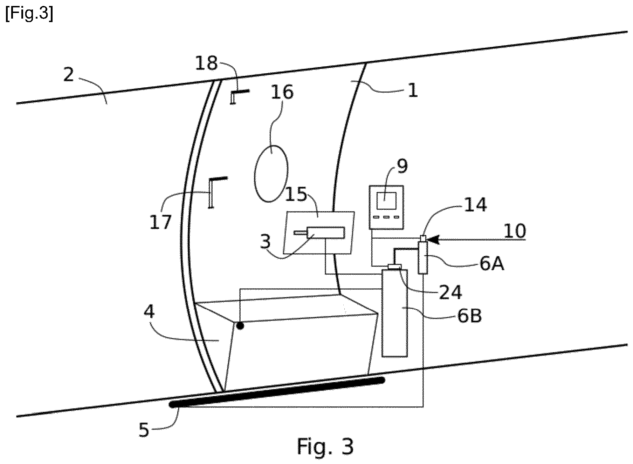

La figure 3 illustre un deuxième mode de réalisation relatif à une variante de la source d'énergie de secours. Les éléments communs avec le premier mode de réalisation de la figure 1 portent les mêmes numéros de renvoi aux figures.

Selon ce deuxième mode de réalisation, la source d'énergie de secours est constituée de deux piles thermiques 6A, 6B, la première pile thermique 6A étant de capacité et de volume réduit, par rapport à la deuxième pile thermique 6B.

Sur la figure 3, seuls les détails relatifs à cette construction de pile thermique ont été représentés, et cette variante contient cependant les mêmes éléments que la réalisation de la figure 1. Ainsi, la première pile thermique 6A comporte un déclencheur mécanique 14 qui peut être activé (action illustrée par la flèche 10) par des liaisons mécaniques liées aux poignées d'ouverture intérieure 17 et extérieure.

La première pile thermique 6A est électriquement reliée, pour servir d'alimentation électrique, uniquement à l'actionneur 5 de barre de retenue et à un déclencheur 24 de la deuxième pile thermique 6B. La première pile thermique 6A est ainsi dimensionnée juste pour l'alimentation de l'actionneur 5 de barre de retenue et pour le déclencheur 24 de la deuxième pile thermique 6B, qui présentent une faible consommation d'énergie électrique.

La deuxième pile thermique 6B est reliée, pour servir d'alimentation électrique, à l'éjecteur 3 et aux moyens de gonflage du dispositif gonflable d'évacuation 4, qui sont d'importants consommateurs d'énergie électrique, et la deuxième pile thermique 6B, ainsi que les câbles d'alimentation associés, sont dimensionnés en conséquence.

L'unité de commande 9 est reliée aux deux piles thermiques pour connaitre leur état respectif.

Selon cette configuration, l'état de fonctionnement nominal de l'unité de commande 9 est le même que pour le premier mode de réalisation. Dans l'état de fonctionnement de secours, la poignée d'ouverture (intérieure ou extérieure) va déclencher mécaniquement le déclencheur 14 de la première pile thermique 6A et cette dernière, étant de taille réduite, va s'activer très rapidement. L'alimentation électrique de l'actionneur 5 de barre de retenue est alors disponible très rapidement, et la première pile thermique 6A active en parallèle la deuxième pile thermique 6B, de taille plus importante, qui nécessite une durée d'activation plus longue.

Dans l'état de fonctionnement de secours depuis l'extérieur, lorsqu'un utilisateur actionne la poignée d'ouverture extérieure alors que la porte est armée, cette architecture garantit que l'actionneur 5 de barre de retenue soit alimenté électriquement de manière très rapide par la première pile thermique 6A, de sorte que l'unité de commande 9 puisse désarmer rapidement le dispositif gonflable de sécurité 4. La première pile thermique 6A peut être placée à distance de l'actionneur 5 par des câbles d'alimentation de faible section, compte tenu de la faible consommation électrique de cet actionneur 5. L'emplacement de la première pile thermique 6A peut donc être optimisé pour être au plus près des éléments mécaniques de déclenchement (la liaison mécanique 19 relative aux poignées d'ouverture), avec peu de contraintes relatives à son câblage électrique.

La deuxième pile thermique 6B est quant à elle placée au plus près de ses consommateurs électriques pour limiter les pertes et la longueur des câbles de forte section nécessaires, sans contraintes relatives à son déclenchement, ce dernier se faisant par un simple câble électrique de faible section provenant de la première pile thermique 6A. Le déclenchement de la deuxième pile thermique 6B se fait avec retard par rapport à la première pile thermique 6B, tout en permettant cependant une alimentation à temps des éléments 3, 4 concernés.

En variante, autant de piles thermiques que nécessaire peuvent être utilisées en déclenchées en cascade, sur ce même modèle où une première pile thermique de faible capacité est déclenchée en premier lieu pour rendre rapidement disponible l'alimentation d'un élément qui a besoin d'être alimenté en priorité.

Des variantes de réalisation de l'architecture de porte d'aéronef peuvent être mises en œuvre. Par exemple, l'électronique de commande de l'unité de commande 9 peut être physiquement regroupée avec les éléments de puissance de la boite d'isolation 7 au sein du même boitier, qui peut également contenir optionnellement l'électronique de commande des différents actionneurs.

L'armement et le désarmement de la porte lors du mode de fonctionnement nominal peut également être commandé par l'unité de commande 9, en complément ou en alternative à une poignée d'armement/désarmement mécanique. L'utilisateur peut alors armer et désarmer la porte directement sur l'interface utilisateur de l'unité de commande 9, qui actionne électriquement l'actionneur 5 de barre de retenue. Dans ce cas, le moyen de couplage 20 est un élément électromécanique activé par l'unité de commande lorsque l'utilisateur arme la porte.

L'architecture électrique peut être modifiée en gardant les mêmes fonctionnalités, par exemple, l'alimentation électrique des actionneurs, aussi bien par le réseau de bord que par la source d'énergie de secours, peut être distribuée directement par l'unité de commande 9.

Dans un exemple non revendiqué, la source d'énergie de secours peut par ailleurs être réalisée par des sources d'énergie autres qu'électriques. Par exemple, la source d'énergie de secours peut être une source d'énergie pneumatique. La distribution de cette énergie est alors réalisée par des distributeurs pneumatiques et des régulateurs, alimentant des actionneurs pneumatiques.

## Revendications

1. Architecture de porte d'aéronef comportant :
- une porte (1) adaptée à être montée dans une ouverture du fuselage d'un aéronef, et adaptée à occuper une position ouverte et une position fermée ;
- un éjecteur (3) adapté à entrainer une ouverture d'urgence de la porte (1) ; l'éjecteur comportant des moyens d'actionnement ;
- un dispositif gonflable d'évacuation (4) adapté à occuper une position rétractée de stockage et une position déployée d'évacuation ; le dispositif gonflable d'évacuation comportant des moyens de gonflage ;
- un actionneur (5) de barre de retenue, qui est activable entre : une position d'armement dans laquelle le dispositif gonflable d'évacuation (4) est retenu ; et une position de désarmement dans laquelle le dispositif gonflable d'évacuation (4) est relâché ;
- une source d'énergie de secours (6) reliée à l'éjecteur (3), au dispositif gonflable d'évacuation (4), et à l'actionneur (5) de barre de retenue, cette source d'énergie de secours (6) étant adaptée à activer les moyens d'actionnement de l'éjecteur (3), les moyens de gonflage du dispositif gonflable d'évacuation (4), et l'actionneur (5) de barre de retenue ;
- une unité de commande (9) comprenant les deux états de fonctionnement suivants : un état de fonctionnement nominal dans lequel le dispositif gonflable d'évacuation (4) est maintenu dans sa position rétractée et la source d'énergie de secours est désactivée ; un état de fonctionnement de secours dans lequel la source d'énergie de secours (6) active les moyens d'actionnement de l'éjecteur (3) selon un mode d'ouverture d'urgence de la porte (1), et active les moyens de gonflage du dispositif gonflable d'évacuation (4) selon un mode de gonflage d'urgence cette architecture de porte d'aéronef étant **caractérisée en ce que** :
- la source d'énergie de secours (6) est un accumulateur électrique et est activée par un déclencheur mécanique (14) relié à un mécanisme d'ouverture/fermeture de la porte (1) ;
- les moyens d'actionnement de l'éjecteur (3) sont des moyens d'actionnement électriques ;
- les moyens de gonflage du dispositif gonflable d'évacuation (4) sont des moyens de gonflage électriques.

2. Architecture de porte d'aéronef selon la revendication 1, **caractérisée en ce que** l'unité de commande (9) comporte une interface de commande pour un utilisateur, cette interface de commande étant adaptée à commander l'actionneur (5) de barre de retenue vers sa position d'armement ou sa position de désarmement, lorsque l'unité de commande (9) est dans son état de fonctionnement nominal.

3. Architecture de porte d'aéronef selon l'une des revendications 1 ou 2, **caractérisée en ce que** l'unité de commande (9) comporte en outre un état de fonctionnement d'ouverture depuis l'extérieur dans lequel l'unité de commande (9) commande l'actionneur (5) de barre de retenue vers sa position de désarmement, en cas d'ouverture de la porte (1) depuis l'extérieur.

4. Architecture de porte d'aéronef selon la revendication 3, **caractérisée en ce que**, dans l'état de fonctionnement d'ouverture depuis l'extérieur, l'unité de commande (9) active les moyens d'actionnement de l'éjecteur (3) selon un mode d'ouverture nominal de la porte (1).

5. Architecture de porte d'aéronef selon l'une des revendications précédentes, **caractérisée en ce que**, dans son état de fonctionnement nominal, l'unité de commande (9) est adaptée à commander l'éjecteur (3) selon un mode d'assistance à l'ouverture/fermeture de la porte (1).

6. Architecture de porte d'aéronef selon la revendication 5 lorsqu'elle dépend de la revendication 3, **caractérisée en ce que** l'interface de commande pour un utilisateur est adaptée à commander également l'éjecteur (3) en mode d'assistance à l'ouverture/fermeture de la porte (1).

7. Architecture de porte d'aéronef selon l'une des revendications 1 à 6, **caractérisée en ce que** la porte (1) comprend une poignée d'armement/désarmement (18), et **en ce que** le mécanisme d'ouverture/fermeture de la porte comprend une poignée d'ouverture qui est mécaniquement reliée au déclencheur mécanique (14) par l'intermédiaire d'un moyen de couplage (20) actionné par la poignée d'armement/désarmement (18).

8. Architecture de porte d'aéronef selon l'une des revendications 1 à 7, **caractérisée en ce que** la source d'énergie de secours (6) comporte une pile thermique.

9. Architecture de porte selon la revendication 8, **caractérisée en ce que** la source d'énergie de secours comporte une première pile thermique (6A) adaptée à alimenter électriquement l'actionneur (5) de barre de retenue et à activer une deuxième pile thermique (6B), de capacité supérieure à celle de la première pile thermique (6A), la deuxième pile thermique (6B) étant adaptée à alimenter électriquement l'éjecteur (3) et les moyens de gonflage du dispositif gonflable d'évacuation (4).

10. Architecture de porte d'aéronef selon l'une des revendications 1 à 9, **caractérisée en ce que** l'éjecteur (3) comporte une connectique de liaison électrique à un réseau électrique de bord d'un aéronef, les moyens d'actionnement électriques de l'éjecteur (3) étant également adaptés à être activés par un réseau électrique de bord d'aéronef.

11. Architecture de porte d'aéronef selon la revendication 10, **caractérisée en ce qu'**elle comporte une boite d'isolation (7) comportant un mode permettant la liaison électrique de l'éjecteur (3), et un mode de coupure de cette liaison électrique.

12. Architecture de porte selon la revendication 11, **caractérisée en ce que** la boite d'isolation (7) est activée en mode de coupure lors de l'activation de la source d'énergie de secours (6).

13. Architecture de porte selon l'une des revendications 10 à 12, **caractérisée en ce que** l'actionneur (5) de barre de retenue comporte une connectique de liaison électrique à un réseau électrique de bord d'un aéronef, l'actionneur (5) de barre de retenue étant également adapté à être activé par un réseau électrique de bord d'aéronef.

## Patentansprüche

1. Flugzeugtürarchitektur, umfassend:
- eine Tür (1), die dazu angepasst ist, in einer Öffnung des Rumpfes eines Flugzeugs montiert zu sein, und dazu angepasst ist, eine geöffnete Position und eine geschlossene Position einzunehmen;
- ein Ausstoßelement (3), das dazu angepasst ist, eine Notfallöffnung der Tür (1) zu bewirken; wobei das Ausstoßelement Betätigungsmittel umfasst;
- eine aufblasbare Evakuierungsvorrichtung (4), die dazu angepasst ist, eine eingefahrene Aufbewahrungsposition und eine ausgefahrene Evakuierungsposition einzunehmen; wobei die aufblasbare Evakuierungsvorrichtung Aufblasmittel umfasst;
- ein Betätigungselement (5) einer Rückhaltestange, das zwischen Folgendem aktivierbar ist: einer scharf gestellten Position, in der die aufblasbare Evakuierungsvorrichtung (4) zurückgehalten wird; und einer unscharf gestellten Position, in der die aufblasbare Evakuierungsvorrichtung (4) entspannt ist;
- eine Notenergiequelle (6), die mit dem Ausstoßelement (3), der aufblasbaren Evakuierungsvorrichtung (4) und dem Betätigungselement (5) einer Rückhaltestange verbunden ist, wobei diese Notenergiequelle (6) dazu angepasst ist, die Betätigungsmittel des Ausstoßelements (3), die Aufblasmittel der aufblasbaren Evakuierungsvorrichtung (4) und das Betätigungselement (5) einer Rückhaltestange zu aktivieren;
- eine Steuereinheit (9), die die zwei folgenden Betriebszustände beinhaltet: einen Sollbetriebszustand, in dem die aufblasbare Evakuierungsvorrichtung (4) in ihrer eingefahrenen Position gehalten wird und die Notenergiequelle deaktiviert ist; einen Notbetriebszustand, in dem die Notenergiequelle (6) die Betätigungsmittel des Ausstoßelements (3) gemäß einem Notfallöffnungsmodus der Tür (1) aktiviert und die Aufblasmittel der aufblasbaren Evakuierungsvorrichtung (4) gemäß einem Notfallaufblasmodus aktiviert, wobei diese Flugzeugtürarchitektur **dadurch gekennzeichnet ist, dass**:
- die Notenergiequelle (6) ein elektrischer Akkumulator ist und durch einen mechanischen Auslöser (14) aktiviert wird, der mit einem Öffnungs-/Schließmechanismus der Tür (1) verbunden ist;
- die Betätigungsmittel des Ausstoßelements (3) elektrische Betätigungsmittel sind;
- die Aufblasmittel der aufblasbaren Evakuierungsvorrichtung (4) elektrische Aufblasmittel sind.

2. Flugzeugtürarchitektur nach Anspruch 1, **dadurch gekennzeichnet, dass** die Steuereinheit (9) eine Steuerschnittstelle für einen Benutzer umfasst, wobei diese Steuerschnittstelle dazu angepasst ist, das Betätigungselement (5) einer Rückhaltestange in seine scharf gestellte Position oder seine unscharf gestellte Position zu steuern, wenn sich die Steuereinheit (9) in ihrem Sollbetriebszustand befindet.

3. Flugzeugtürarchitektur nach einem der Ansprüche 1 oder 2, **dadurch gekennzeichnet, dass** die Steuereinheit (9) ferner einen Betriebszustand für das Öffnen von außen umfasst, in dem die Steuereinheit (9) das Betätigungselement (5) einer Rückhaltestange in seine unscharf gestellte Position steuert, falls die Tür (1) von außen geöffnet werden soll.

4. Flugzeugtürarchitektur nach Anspruch 3, **dadurch gekennzeichnet, dass** die Steuereinheit (9) in dem Betriebszustand für das Öffnen von außen die Betätigungsmittel des Ausstoßelements (3) gemäß einem Sollöffnungsmodus der Tür (1) aktiviert.

5. Flugzeugtürarchitektur nach einem der vorhergehenden Ansprüche, **dadurch gekennzeichnet, dass** die Steuereinheit (9) in ihrem Sollbetriebszustand dazu angepasst ist, das Ausstoßelement (3) gemäß einem Modus zur Unterstützung des Öffnens/Schließens der Tür (1) zu steuern.

6. Flugzeugtürarchitektur nach Anspruch 5, wenn dieser von Anspruch 3 abhängt, **dadurch gekennzeichnet, dass** die Steuerschnittstelle für einen Benutzer dazu angepasst ist, auch das Ausstoßelement (3) in einem Modus zur Unterstützung des Öffnens/Schließens der Tür (1) zu steuern.

7. Flugzeugtürarchitektur nach einem der Ansprüche 1 bis 6, **dadurch gekennzeichnet, dass** die Tür (1) einen Griff zum Scharfstellen/Unscharfstellen (18) beinhaltet und dass der Öffnungs-/Schließmechanismus der Tür einen Griff zum Öffnen beinhaltet, der mittels eines Kupplungsmittels (20), das durch den Griff zum Scharfstellen/Unscharfstellen (18) betätigt wird, mit dem mechanischen Auslöser (14) mechanisch verbunden ist.

8. Flugzeugtürarchitektur nach einem der Ansprüche 1 bis 7, **dadurch gekennzeichnet, dass** die Notenergiequelle (6) eine Thermalbatterie umfasst.

9. Flugzeugtürarchitektur nach Anspruch 8, **dadurch gekennzeichnet, dass** die Notenergiequelle eine erste Thermalbatterie (6A) umfasst, die dazu angepasst ist, das Betätigungselement (5) einer Rückhaltestange mit Strom zu versorgen und eine zweite Thermalbatterie (6B) mit einer größeren Kapazität als die erste Thermalbatterie (6A) zu aktivieren, wobei die zweite Thermalbatterie (6B) dazu angepasst ist, das Ausstoßelement (3) und die Aufblasmittel der aufblasbaren Evakuierungsvorrichtung (4) mit Strom zu versorgen.

10. Flugzeugtürarchitektur nach einem der Ansprüche 1 bis 9, **dadurch gekennzeichnet, dass** das Ausstoßelement (3) eine elektrische Verbindungstechnik zu einem elektrischen Bordnetz eines Flugzeugs umfasst, wobei die elektrischen Betätigungsmittel des Ausstoßelements (3) auch dazu angepasst sind, durch ein elektrisches Flugzeugbordnetz aktiviert zu werden.

11. Flugzeugtürarchitektur nach Anspruch 10, **dadurch gekennzeichnet, dass** sie einen Schaltkasten (7) umfasst, der einen Modus, der die elektrische Verbindung des Ausstoßelements (3) ermöglicht, und einen Modus zum Unterbrechen dieser elektrischen Verbindung umfasst.

12. Flugzeugtürarchitektur nach Anspruch 11, **dadurch gekennzeichnet, dass** der Schaltkasten (7) bei Aktivierung der Notenergiequelle (6) im Unterbrechungsmodus aktiviert ist.

13. Flugzeugtürarchitektur nach einem der Ansprüche 10 bis 12, **dadurch gekennzeichnet, dass** das Betätigungselement (5) einer Rückhaltestange eine elektrische Verbindungstechnik zu einem elektrischen Bordnetz eines Flugzeugs umfasst, wobei das Betätigungselement (5) einer Rückhaltestange auch dazu angepasst ist, durch ein elektrisches Flugzeugbordnetz aktiviert zu werden.

## Claims

1. An aircraft door architecture including:
- a door (1) adapted to be mounted in an opening in the fuselage of an aircraft and adapted to occupy an open position and a closed position;
- an ejector (3) adapted to drive emergency opening of the door (1), the ejector (3) comprising means for actuating ;
- an inflatable evacuation device (4) adapted to occupy a retracted storage position and a deployed evacuation position, the inflatable evacuation device (4) comprising means for inflating ;
- a retaining bar actuator (5) that can be activated between: an arming position in which the inflatable evacuation device (4) is retained; and a disarming position in which the inflatable evacuation device (4) is released ;
- an emergency energy source (6) connected to the ejector (3), to the inflatable evacuation device (4) and to the retaining bar actuator (5), this emergency energy source (6) being adapted to activate the means for actuating the ejector (3), the means for inflating the inflatable evacuation device (4) and the retaining bar actuator (5);
- a control unit (9) having the following two operating states: a nominal operating state in which the inflatable evacuation device (4) is retained in its retracted position and the emergency energy source is deactivated; and an emergency operating state in which the emergency energy source (6) activates the means for actuating the ejector (3) in an emergency mode of opening the door (1) and activates the means for inflating the inflatable evacuation device (4) in an emergency inflation mode;
this aircraft door architecture being **characterized in that**:
- the emergency energy source (6) is an electric battery and is activated by a mechanical trigger (14) connected to a mechanism for opening/closing the door (1);
- the means for activating the ejector (3) are electric means for activating;
- the means for inflating the inflatable evacuation device are electrical means for inflating.

2. The aircraft door architecture as claimed in claim 1, **characterized in that** the control unit (9) includes a control interface for a user, this control interface being adapted to drive the retaining bar actuator (5) to its arming position or its disarming position when the control unit (9) is in its nominal operating state.

3. The aircraft door architecture as claimed in either one of claims 1 or 2, **characterized in that** the control unit (9) further includes an opening from the exterior operating state in which the control unit (9) drives the retaining bar actuator (5) to its disarming position in the event of opening of the door (1) from the exterior.

4. The aircraft door architecture as claimed in claim 3, **characterized in that** in the opening from the exterior operating mode the control unit (9) activates the means for actuating the ejector (3) in a nominal mode of opening the door (1).

5. The aircraft door architecture as claimed in any one of the preceding claims, **characterized in that** in its nominal operating state the control unit (9) is adapted to control the ejector (3) in accordance with a mode for assisting opening/closing of the door (1).

6. The aircraft door architecture as claimed in claim 5 when dependent on claim 3, **characterized in that** the control interface for a user is adapted also to control the ejector (3) in the mode for assisting opening/closing of the door (1).

7. The aircraft door architecture as claimed in either one of claims 1 to 6, **characterized in that** the door (1) comprises an arming/disarming handle (18) and **in that** the mechanism for opening/closing the door comprises an opening handle that is mechanically connected to the mechanical trigger (14) by means of a coupling means (20) actuated by the arming/disarming handle (18).

8. The aircraft door architecture as claimed in any one of claims 1 to 7, **characterized in that** the emergency energy source (6) includes a thermal battery

9. The door architecture as claimed in claim 8, **characterized in that** the emergency energy source includes a first thermal battery (6A) adapted to power electrically the retaining bar actuator (5) and to activate a second thermal battery (6B) of greater capacity than the first thermal battery (6A), the second thermal battery (6B) being adapted to power electrically the ejector (3) and the means for inflating the inflatable evacuation device (4).

10. The aircraft door architecture as claimed in any one of claims 1 to 9, **characterized in that** the ejector (3) includes connectors for electrical connection to an onboard electrical network of an aircraft, the electric actuation means of the ejector (3) being also adapted to be activated by an aircraft onboard electrical network.

11. The aircraft door architecture as claimed in claim 10, **characterized in that** it includes an isolation box (7) having a mode enabling electrical connection of the ejector (3) and a mode for breaking that electrical connection

12. The aircraft door architecture as claimed in claim 11, **characterized in that** the isolation box (7) is activated in breaking mode upon activation of the emergency energy source (6).

13. The door architecture as claimed in any one of claims 12 to 14, **characterized in that** the retaining bar actuator (5) includes connectors for electrical connection to an onboard electrical network of an aircraft, the retaining bar actuator (5) being also adapted to be activated by an aircraft onboard electrical network
